(19) Europäisches Patentamt
European Patent Office
Office européen des brevets

(11) **EP 2 265 063 A2**

(12) **EUROPEAN PATENT APPLICATION**

(43) Date of publication:
**22.12.2010 Bulletin 2010/51**

(51) Int Cl.:
***H04W 56/00*** (2009.01)

(21) Application number: **10164640.4**

(22) Date of filing: **01.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **18.06.2009 JP 2009144820**

(71) Applicant: **FUJITSU LIMITED**
**Kawasaki-shi,**
**Kanagawa 211-8588 (JP)**

(72) Inventors:
• **Satou, Hideyori**
**Kawasaki-shi, Kanagawa 211-8588 (JP)**
• **Konta, Shinji**
**Kawasaki-shi, Kanagawa 211-8588 (JP)**
• **Kamada, Takashi**
**Kawasaki-shi, Kanagawa 211-8588 (JP)**

(74) Representative: **Stebbing, Timothy Charles**
**Haseltine Lake LLP**
**5th Floor, Lincoln House**
**300 High Holborn**
**London, Greater London WC1V 7JH (GB)**

(54) **Mobile terminal in mobile communication system, transmission timing adjustment apparatus and method for adjusting transmission timing**

(57)     A mobile terminal includes: a detection unit (12) configured to detect reception timing of radio frames transmitted from first and second base stations; and an adjustment unit (15) configured to adjust transmission timing of a radio frame transmitted from the mobile terminal to the first base station so that a predetermined relationship between transmission timing of a radio frame transmitted from the first base station to the mobile terminal and the reception timing of a radio frame received by the first base station is satisfied, wherein the adjustment unit (15) adjusts transmission timing of a radio frame transmitted from the mobile terminal to the second base station based on the adjusted transmission timing to the first base station and a difference between the reception timing of a radio frame transmitted from the first base station and the reception timing of a radio frame transmitted from the second base station detected by the detection unit. The above structure is applied, for example, to handover in an LTE system so as to avoid the need for a RACH procedure during handover.

FIG. 4

**Description**

The present invention relates to a mobile terminal performing handover processing to switch a radio base station for communication in a mobile communication system.

In the mobile communication field, at present, standardization of an LTE (Long Term Evolution) system is in progress. The LTE system is an evolved standard system of W-CDMA (Wideband Code Division Multiple Access) high-speed data communication HSDPA (High Speed Downlink Packet Access). The standardization work of the LTE system is being carried out by 3GPP (the 3rd Generation Partnership Project).

In the LTE mobile communication system (hereafter simply referred to as LTE system), a radio base station receives uplink signals from a mobile terminal with which it is in communication, in synchronization with a reference timing repeated with a predetermined period, and transmits downlink signals to the mobile terminal. Accordingly, in consideration of a propagation delay between the radio base station and the mobile terminal, the mobile terminal transmits each uplink signal at an earlier timing than the reference timing by a predetermined time so that the radio base station can receive the uplink signal at the reference timing. Information of the above uplink signal transmission timing is sent from the radio base station to the mobile terminal. The propagation delay between the radio base station and the mobile terminal is liable to change dependent on a distance between the radio base station and the mobile terminal. Therefore, according to a distance change along with movement of the mobile terminal, the radio base station sends the transmission timing to the mobile terminal.

Further, the radio base station multiplexes and transmits PSC (Primary Synchronization Code) and SSC (Secondary Synchronization Code) in the downlink signal. PSC and SSC are codes to identify the radio base station, and the mobile terminal detects a cell identification signal (cell ID) from PSC and SSC included in the received signal (cell search). When a mobile terminal is to start communication with a base station, the operation of the mobile terminal to detect the cell ID of the base station covering an area the mobile terminal is located in, is referred to as initial cell search. Also, the operation of the mobile terminal currently communicating with the base station to detect the cell ID of other base stations covering neighboring areas is referred to as neighboring cell search.

As a result of the movement of the mobile terminal, when the mobile terminal encounters a bad communication condition with the radio base station with which it is currently in communication (referred to below simply as "the base station currently in communication"), if a more appropriate radio base station exists, the mobile terminal performs handover processing to switch over to the other radio base station for communication. For this purpose, the mobile terminal is required to have detected a surrounding base station other than the radio base station currently in communication, and the mobile terminal performs the neighboring cell search accordingly.

When the mobile terminal moves near the cell edge of the radio base station currently in communication, handover processing is performed to switch over the communication target from the radio base station currently in communication to the adjacent radio base station (i.e. a base station which is a target for handover, below referred to as "base station of handover target"). In the LTE system, the mobile terminal acquires transmission timing through RACH procedure, based on a propagation delay corresponding to a distance to the radio base station to be handed over (or handover target). The operation of the RACH procedure is specified in 3GPP TS 36.213 version 8.6.0 "6 Random access procedure". The mobile terminal requests the radio base station of handover target to send transmission timing through an RA (Random access) channel. Then the radio base station of handover target decides the transmission timing, and transmits it to the mobile terminal.

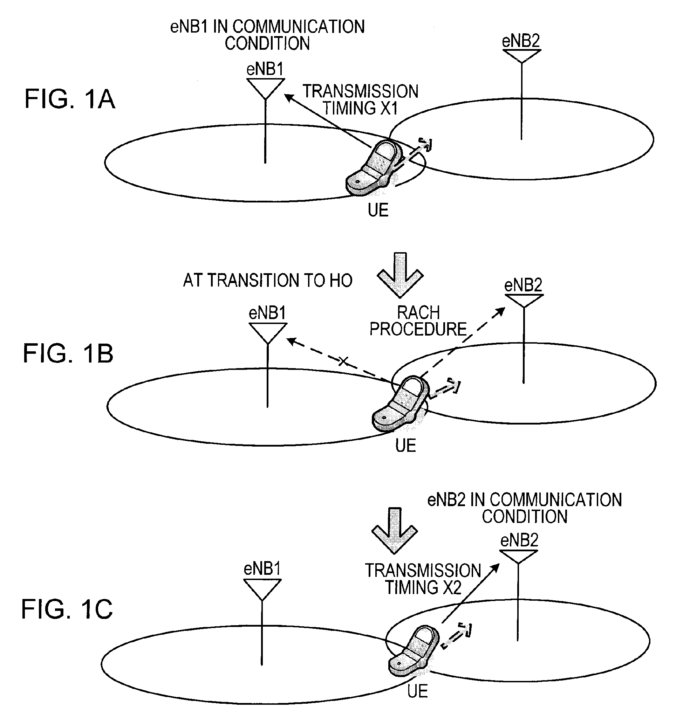

FIGS. 1A through 1C illustrate diagrams illustrating the conventional handover processing. A mobile terminal UE (User Apparatus) located in the cell of a radio base station eNB1 (e-Node B #1) moves toward the direction of the cell of a radio base station eNB2, while communicating with the radio base station eNB1 (FIG. 1A). An uplink signal from the mobile terminal UE is transmitted at transmission timing X1. In the mobile terminal UE, the information of the above transmission timing X1 to the radio base station eNB1 is received from the radio base station eNB1. When the mobile terminal UE enters the cell of the radio base station eNB2 and arrives near the cell edge of the radio base station eNB1, the mobile terminal UE starts handover processing to the radio base station eNB2 (FIG. 1B). At the start of the handover processing, the mobile terminal UE disconnects communication with the radio base station eNB1, and starts the RACH procedure with the radio base station eNB2. Through the RACH procedure, the mobile terminal UE transmits to the radio base station eNB2 a request signal for transmission timing. The radio base station eNB2 decides transmission timing X2 from a time difference between signal reception timing from the mobile terminal UE and reference timing, and sends the transmission timing X2 to the mobile terminal. On receiving the transmission timing, the mobile terminal UE transmits an uplink signal in synchronization with the above transmission timing X2, and starts communication with the radio base station eNB2 (FIG. 1C).

In Patent document 1 illustrated below, there is disclosed a method for communicating with a radio base station of handover target, by sending transmission timing from a radio base station of handover source (namely, the base station with which the mobile terminal is already connected). The radio base station of handover target sends transmission timing information, calculated from a phase difference between the reception timing of an uplink signal from the mobile terminal and a reference timing, to the radio base station of handover source via an upper-level base station control unit.

However, while the above-mentioned RACH procedure is being executed, the mobile terminal cannot perform data communication either with the radio base station of handover source, nor with the radio base station of handover target. This may possibly cause degradation of service quality, such as communication speed reduction and voice interruption. In particular, at handover processing, because the mobile terminal UE is located near the cell edge of the radio base station eNB2 of handover target, receiving conditions at the radio base station eNB2 are relatively degraded. This makes retransmission processing apt to occur, and also the RACH procedure period may possibly be elongated.

[Patent documents]

Japanese Laid Open Patent Hei9-163432

[Non-patent documents]

3GGP tTS36.213 Ver. 8. 6. 0 6 Random access procedure

Accordingly, it is desirable to provide a mobile terminal capable of autonomously deciding transmission timing to a radio base station of handover target by itself, even when the RACH procedure is not executed.

According to an aspect of the invention, a mobile terminal performing radio communication with a base station, includes: a detection unit configured to detect reception timing of each radio frame transmitted from first and second base stations; and an adjustment unit configured to adjust a transmission timing of the mobile terminal relative to the first base station so that a predetermined relationship between the transmission timing and the reception timing of the radio frame relative to the mobile terminal is satisfied in the first base station, wherein the adjustment unit adjusts transmission timing relative to the second base station, using the adjusted transmission timing relative to the first base station and a difference between the reception timing relative to the first base station and the reception timing relative to the second base station respectively detected by the detection unit.

According to an aspect of the invention, a transmission timing adjustment apparatus for adjusting transmission timing in a mobile terminal performing radio communication with a base station, includes: a detection unit configured to detect reception timing of radio frames transmitted from first and second base stations; and an adjustment unit configured to adjust transmission timing of a radio frame transmitted from the mobile terminal to the first base station so that predetermined relationship between transmission timing of a radio frame transmitted from the first base station to the mobile terminal and the reception timing of a radio frame received by the first base station and transmitted from the mobile terminal is satisfied, wherein the adjustment unit adjusts transmission timing of a radio frame transmitted from the mobile terminal to the second base station based on the adjusted transmission timing to the first base station and a difference between the reception timing of a radio frame transmitted from the first base station and the reception timing of a radio frame transmitted from the second base station respectively detected by the detection unit.

According to an aspect of the invention, a transmission timing adjustment method of a mobile terminal performing radio communication with a base station, includes: detecting reception timing of radio frames transmitted from first and second base stations; adjusting transmission timing of a radio frame transmitted from the mobile terminal to the first base station so that a predetermined relationship between transmission timing of a radio frame transmitted from the first base station to the mobile terminal and the reception timing of a radio frame received by the first base station and transmitted from the mobile terminal is satisfied, adjusting transmission timing of a radio frame transmitted from the mobile terminal to the second base station based on the adjusted transmission timing to the first base station and a difference between the reception timing of a radio frame transmitted from the first base station and the reception timing of a radio frame transmitted from the second base station, respectively detected by the detection unit.

Reference is made, by way of example only, to the accompanying drawings in which:

FIGs. 1A-1C are diagrams illustrating the conventional handover processing.

FIGs. 2A-2B are diagrams illustrating a transmission timing decision method in a mobile terminal.

FIGs. 3A-3C are diagrams illustrating calculation examples of the transmission timing t2s.

FIG. 4 illustrates an exemplary configuration of the mobile communication system according to the present embodiment.

FIG. 5 illustrates a diagram illustrating an exemplary configuration of the mobile terminal UE according to the present embodiment.

FIG. 6 is a flowchart of transmission timing adjustment processing according to the present embodiment.

Preferred embodiments of the present invention will be explained with reference to the accompanying drawings.

In a mobile terminal according to the present embodiment, at the time of handover processing, transmission timing to a radio base station of handover target is decided in the mobile terminal itself without the execution of RACH procedure. A method for deciding the transmission timing in the mobile terminal will be described below.

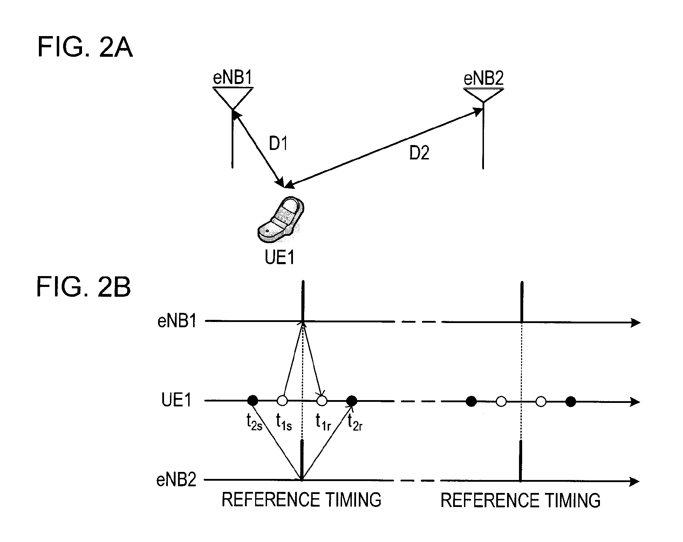

FIGS. 2A and 2B illustrate diagrams illustrating a transmission timing decision method in a mobile terminal. Let D1 be a distance between a mobile terminal UE and a radio base station eNB1 (handover source) currently communicating therewith, and also D2 be a distance between the mobile terminal UE and a radio base station eNB2 of handover target (FIG. 2A). Also, let t1s be transmission timing at which the mobile terminal UE transmits an uplink signal to the radio base station eNB1, and t1r be reception timing at which the mobile terminal UE receives a downlink signal from the radio base station eNB1. Further, let t2s be transmission timing at which the mobile terminal UE transmits an uplink signal to the radio base station eNB2, and t2r be reception timing at which the mobile terminal UE receives a downlink signal from the radio base station eNB2 (FIG. 2B).

By letting V be a radio signal propagation speed in the air, the following expressions (1), (2) hold.

$$2 \times D1 = (t1r-t1s) \times V \quad ... \quad (1)$$

$$2 \times D2 = (t2r-t2s) \times V \quad ... \quad (2)$$

Also, the reference timing in the radio base station eNB1 is synchronized with the reference timing in the radio base station eNB2. Therefore, from the difference between the reception timing t1r and t2r, the following expression (3) holds.

$$D2 - D1 = (t2r - t1r) \times V \quad ... \quad (3)$$

By substituting expressions (2) and (1) into expression (3), and rearranging with the transmission timing t2s, the transmission timing t2s can be obtained by expression (4).

$$t2s = t1s + t1r - t2r \quad ... \quad (4)$$

As such, the transmission timing t2s to the radio base station eNB2 of handover (HO) target can be calculated using the transmission timing t1s to the radio base station eNB1 of HO source and the difference (t1r - t2r) between the reception timing from the radio base station eNB1 of HO source and the reception timing from the radio base station eNB2 of HO target.

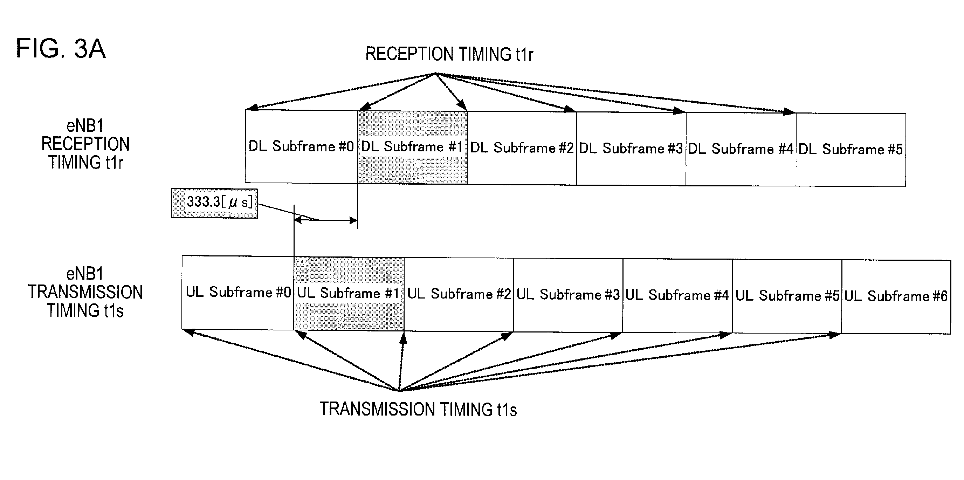

FIGs. 3A through 3C illustrate diagrams illustrating calculation examples of the transmission timing t2s. FIG. 3A illustrates the reception timing t1r and the transmission timing t1s of the mobile terminal UE, communicating with the radio base station eNB1, before the start of handover processing. The reception timing t1r is timing at which the mobile terminal UE receives a downlink radio frame (DL subframe) from the radio base station eNB1, and is detected by the mobile terminal UE.

The transmission timing t1s is timing at which the mobile terminal UE transmits an uplink radio frame (UL subframe) to the radio base station eNB1. The initial value of the transmission timing t1s informed from the radio base station eNB1 is time difference information relative to the reception timing t1r. In FIG. 3A, the transmission timing t1s is equal to the reception timing t1r - 333.3 [μs]. When starting communication with the radio base station eNB1, the mobile terminal UE transmits a signal (preamble) for requesting transmission timing through the RACH procedure, using an uplink radio frame. The mobile terminal UE transmits the above preamble signal at the timing of the reception timing t1r of the downlink radio frame. The radio base station eNB1 transmits a time difference between the reception timing of the preamble signal and the reference signal, as transmission timing signal information. Therefore, the initial value of the transmission timing t1s is the time difference from the reception timing t1r. Thereafter, when the transmission timing t1s changes because of the movement of the mobile terminal UE, the radio base station eNB1 sends to the mobile terminal UE the information of a time difference from the current transmission timing t1s. Even in the above case, by accumulating difference values of the change of the transmission timing t1s, the mobile terminal UE can grasp the transmission timing t1s, as time difference information relative to the reception timing t1r. As the distance between the mobile terminal UE and the radio base station eNB1 becomes longer, the transmission timing t1s relative to the reception timing t1r becomes earlier.

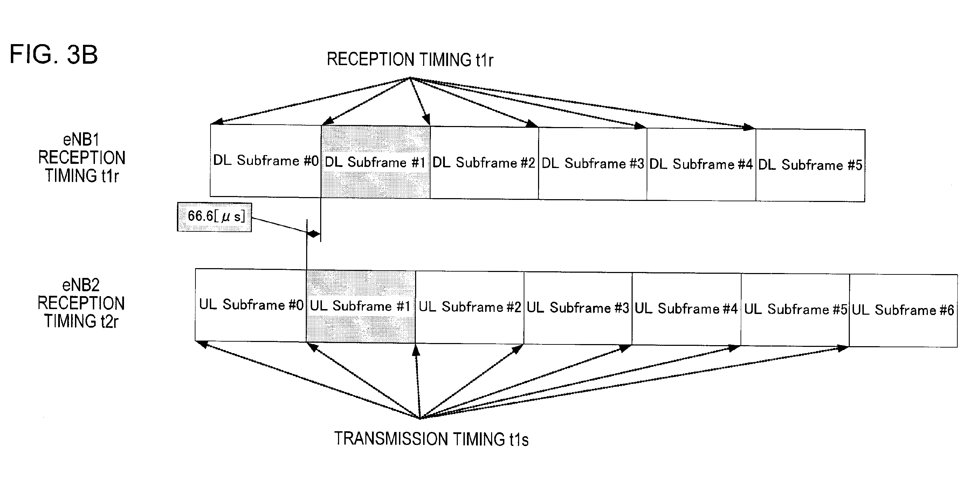

FIG. 3B illustrates the reception timing t1r of the downlink radio frame from the radio base station eNB1 of handover source at the time of handover processing, and the reception timing t2r of the downlink radio frame from the radio base station eNB2 of handover target. The reception timing is different depending on a difference of the distance between the mobile terminal UE and the radio base station eNB1 from the distance between the mobile terminal UE and the radio base station eNB2. In the example illustrated in FIG. 3B, the reception timing t2r to receive a radio frame from the radio base station eNB2 is 66.6 [μs] earlier than the reception timing t1r to receive a radio frame from the radio base station eNB1.

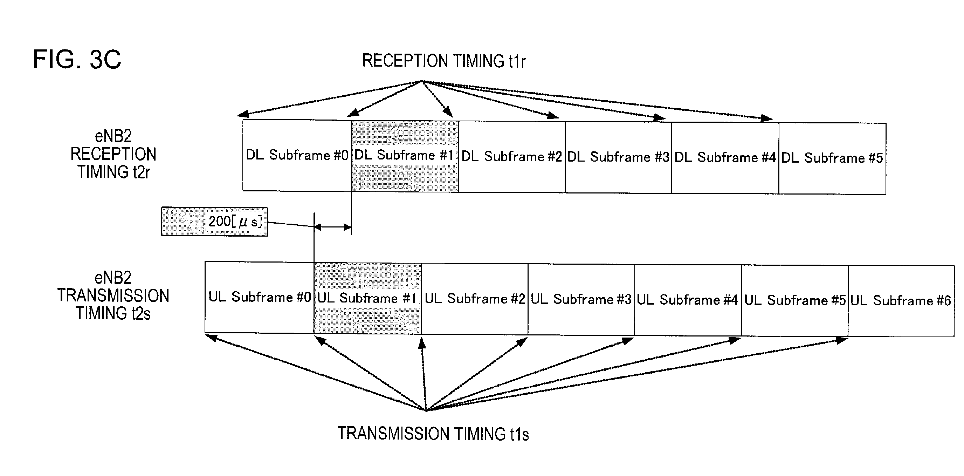

FIG. 3C illustrates the reception timing t2r and the transmission timing t2s of the mobile terminal UE communicating with the radio base station eNB2 of handover target. The transmission timing t2s can be obtained from the aforementioned expression (4), based on the reception timing t1r, transmission timing t1s and the reception timing t2r. By the calculation of the transmission timing t2s as time difference information relative to the reception timing t2r, from expression (4), the transmission timing t2s can be obtained as follows.

$$t2s = t1r + t1s - t2r$$
$$= (t2r+66.6) + (t2r+66.6-333.3) - t2r$$
$$= t2r - 200$$

As such, the mobile terminal UE can autonomously obtain the transmission timing t2s to the radio base station eNB2 which is the handover target. Accordingly, at the time of handover processing, the RACH procedure for requesting the radio base station eNB2 to send the transmission timing t2s becomes unnecessary, and thus a communication disabled period due to the RACH procedure can be eliminated.

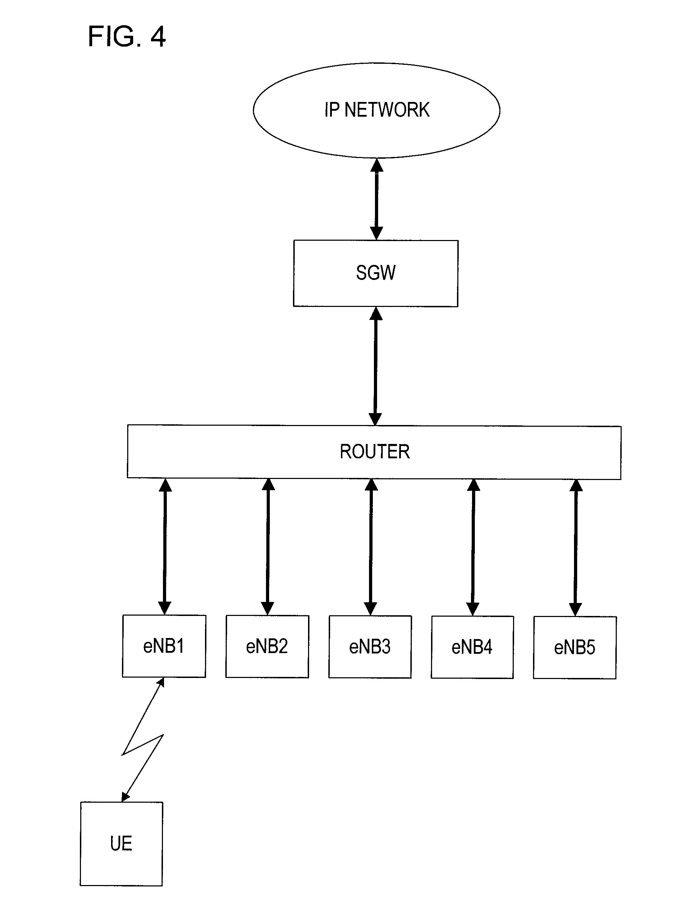

FIG. 4 illustrates an exemplary configuration of the mobile communication system according to the present embodiment. The mobile communication system is an LTE system in which the LTE scheme is adopted. The LTE system includes mobile terminal (UE: User Apparatus), radio base station (eNB: evolved Node B) and a gateway apparatus (SGW: Serving Gateway). There are disposed a plurality of radio base stations, and in FIG. 4, the plurality of radio base stations including two eNB (eNB1, eNB2) corresponding to the aforementioned radio base stations. Each radio base station is connected to the SGW via a router. Each radio base station eNB can perform radio communication with the plurality of mobile terminals UE located in its cell. The gateway apparatus SGW is an upper-level apparatus for transferring radio frames to an IP network.

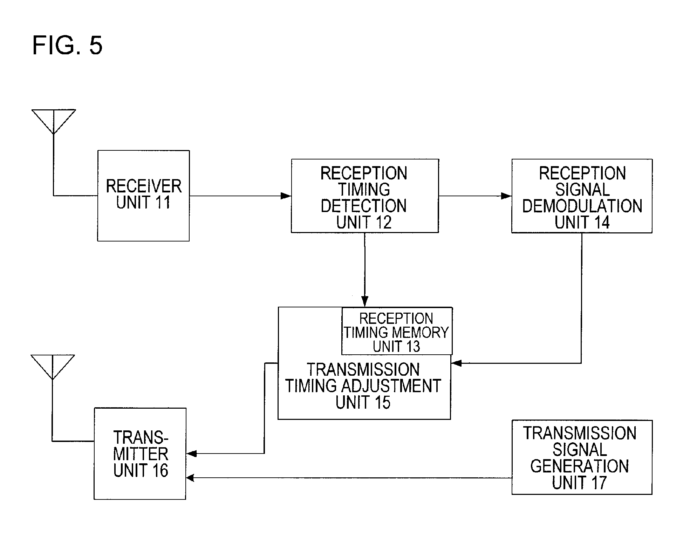

FIG. 5 illustrates a diagram illustrating an exemplary configuration of the mobile terminal UE according to the present embodiment. The mobile terminal UE includes receiver unit 11, reception timing detection unit 12, reception timing memory unit 13, reception signal demodulation unit 14, transmission timing adjustment unit 15, transmitter unit 16 and transmission data generation unit 17. Receiver unit 11 receives a downlink radio frame from the radio base station eNB. Receiver unit performs frequency conversion of the received analog signal, and further converts to a digital signal through A/D conversion. Reception timing detection unit 12 detects the reception timing of the downlink radio frame from sampling timing, and sends the detected reception timing to transmission timing adjustment unit 15. Reception timing memory unit 13 is an internal buffer of transmission timing adjustment unit 15, and stores the reception timing after identifying each radio base station. Reception signal demodulation unit 14 demodulates digital control information and data information. Demodulation unit 14 demodulates the control information, and when transmission timing information is included in the control information, demodulation unit 14 sends the transmission timing information to transmission timing adjustment unit 15. Also, by demodulating the control information, reception signal demodulation unit 14 sends to transmission timing adjustment unit 15 the start/completion of the handover processing and handover information in regard to the radio base station of handover target.

During normal communication, transmission timing adjustment unit 15 adjusts the transmission timing of the uplink radio frame according to the transmission timing information sent from reception signal demodulation unit 14. As described above, the initial value of the transmission timing is counted from the criterion of the reception timing, transmission timing adjustment unit 15 includes reception timing memory unit 13 for storing the reception timing as internal buffer. When the transmission timing is not included in the control information, the most recent transmission timing stored in reception timing memory unit 13 is applied, and the transmission timing is not changed. When the distance between with the mobile terminal UE changes, necessitating a transmission timing change, the radio base station sends the change value of the transmission timing to the mobile terminal UE.

On deciding the execution of handover processing based on the handover information sent from reception signal demodulation unit 14, transmission timing adjustment unit 15 calculates the transmission timing to the radio base station of handover target, and adjusts the transmission timing to the calculated value. Transmitter unit 16 performs modulation processing of a transmission signal generated in transmission signal generation unit 17, and after converting it to an analog signal through D/A conversion, performs conversion to a radio frequency. Transmitter unit 16 then transmits the transmission signal at the transmission timing specified by timing adjustment unit 15.

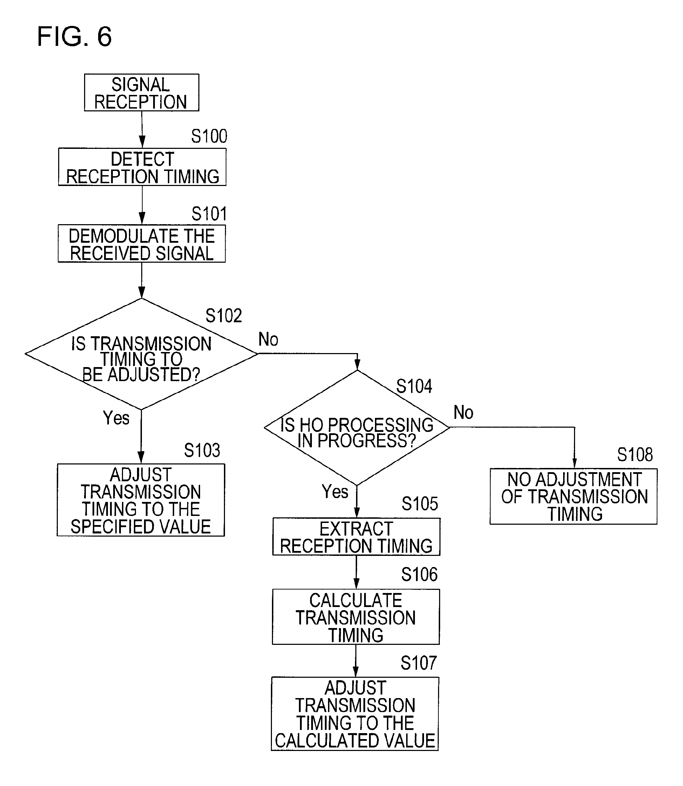

FIG. 6 is a flowchart of transmission timing adjustment processing according to the present embodiment. Reception timing detection unit 12 detects the reception timing of a received downlink radio frame (S100). Reception signal demodulation unit 14 demodulates the received signal (S101). If transmission timing information is included in the control signal, reception signal demodulation unit 14 sends the above transmission timing information to transmission timing adjustment unit 15. Transmission timing adjustment unit 15 decides the presence or absence of transmission timing information at each predetermined decision interval (S102). If the transmission timing information is sent, transmission timing adjustment unit 15 adjusts the transmission timing to a specified value included in the transmission timing information (S103). If the transmission timing information is not sent, transmission timing adjustment unit 15 decides whether the handover processing is in progress, based on the handover information from reception signal demodulation unit 14 (S104). When handover processing is in progress, transmission timing adjustment unit 15 extracts from reception timing memory unit 13 the reception timing in both the radio base station of handover source and the radio base station of handover target (S105). Then, according to the transmission timing decision method described earlier, transmission timing adjustment unit 15 calculates the transmission timing to the radio base station of handover target, based on the above two pieces of data of the reception timing and the transmission timing to the radio base station of handover source which is currently set (S106). Transmission timing adjustment unit 15 adjusts the transmission timing to the calculated value (S107). In step S104, if handover processing is not in progress, the specified value of transmission timing is not sent, and therefore the current set value of the transmission timing is retained unchanged (S108).

The above-mentioned present embodiment is not limited to the mobile terminal in the LTE mobile communication system, and it is also applicable to mobile terminals in mobile communication systems based on other schemes in which each radio base station sends transmission timing to the mobile terminal at handover processing.

In the present embodiment, the description has been given to such a case that a radio base station receives an uplink signal from a mobile terminal and transmits a downlink signal to the mobile terminal, at the reference timing of a predetermined period. Here, in regard to the above reference timing, it is not limited to the case that reception timing in the radio base station matches with transmission timing. It is also possible even if there is a time difference between the reference timing for receiving the uplink signal and the reference timing for transmitting the downlink signal. In this case, the period of the reference timing for receiving the uplink signal is identical to the period of the reference timing for transmitting the downlink signal, and the time difference is constant. Further, even when the time difference exists, it is possible to calculate the transmission timing, using the aforementioned expression (4).

The mobile terminal can decide the transmission timing to the radio base station of handover target by itself (autonomously). Also, it is possible to eliminate a disabled condition of data communication at handover, accompanying the RACH procedure execution to request the radio base station to send transmission timing. Thus, it is possible to prevent the deterioration of communication service quality, such as communication speed reduction and voice interruption.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the scope of the claims.

## Claims

1.    A mobile terminal for performing radio communication with a base station, comprising:

   a detection unit configured to detect reception timing of radio frames transmitted from first and second base stations; and
   an adjustment unit configured to adjust transmission timing of a radio frame transmitted from the mobile terminal to the first base station so that a predetermined relationship between transmission timing of a radio frame transmitted from the first base station to the mobile terminal and the reception timing of a radio frame received by the first base station and transmitted from the mobile terminal is satisfied,
   wherein the adjustment unit is arranged to adjust transmission timing of a radio frame transmitted from the mobile terminal to the second base station based on the adjusted transmission timing to the first base station and a difference between the reception timing of a radio frame transmitted from the first base station and the reception timing of a radio frame transmitted from the second base station respectively detected by the detection unit.

2.    The mobile terminal according to claim 1, wherein the adjustment unit is arranged to calculate the transmission timing of a radio frame transmitted from the mobile terminal to the second base station based on the adjusted transmission timing to the first base station and a difference between the reception timing of a radio frame transmitted from the first base station and the reception timing of a radio frame transmitted from the second base station respectively detected in the detection unit at the time of handover from the first base station to the second base station.

3.    A transmission timing adjustment apparatus for adjusting transmission timing in a mobile terminal performing radio communication with a base station, comprising:

a detection unit configured to detect reception timing of radio frames transmitted from first and second base stations; and

an adjustment unit configured to adjust transmission timing of a radio frame transmitted from the mobile terminal to the first base station so that predetermined relationship between transmission timing of a radio frame transmitted from the first base station to the mobile terminal and the reception timing of a radio frame received by the first base station and transmitted from the mobile terminal is satisfied,

wherein the adjustment unit is arranged to adjust transmission timing of a radio frame transmitted from the mobile terminal to the second base station based on the adjusted transmission timing to the first base station and a difference between the reception timing of a radio frame transmitted from the first base station and the reception timing of a radio frame transmitted from the second base station respectively detected by the detection unit.

4. The transmission timing adjustment apparatus according to claim 3,

wherein the adjustment unit is arranged to calculate the transmission timing of a radio frame transmitted from the mobile terminal to the second base station based on the adjusted transmission timing to the first base station and a difference between the reception timing of a radio frame transmitted from the first base station and the reception timing of a radio frame transmitted from the second base station respectively detected in the detection unit at the time of handover from the first base station to the second base station.

5. A transmission timing adjustment method of a mobile terminal performing radio communication with a base station, comprising:

detecting reception timing of radio frames transmitted from first and second base stations;

adjusting transmission timing of a radio frame transmitted from the mobile terminal to the first base station so that a predetermined relationship between transmission timing of a radio frame transmitted from the first base station to the mobile terminal and the reception timing of a radio frame received by the first base station and transmitted from the mobile terminal is satisfied,

adjusting transmission timing of a radio frame transmitted from the mobile terminal to the second base station based on the adjusted transmission timing to the first base station and a difference between the reception timing of a radio frame transmitted from the first base station and the reception timing of a radio frame transmitted from the second base station respectively detected by the detection unit.

FIG. 1A

eNB1 IN COMMUNICATION
CONDITION

eNB1

eNB2

TRANSMISSION
TIMING X1

UE

FIG. 1B

AT TRANSITION TO HO

RACH
PROCEDURE

eNB1

eNB2

UE

FIG. 1C

eNB2 IN COMMUNICATION
CONDITION

eNB1

eNB2

TRANSMISSION
TIMING X2

UE

## FIG. 2A

## FIG. 2B

# FIG. 3A

RECEPTION TIMING t1r

eNB1
RECEPTION
TIMING t1r

| DL Subframe #0 | DL Subframe #1 | DL Subframe #2 | DL Subframe #3 | DL Subframe #4 | DL Subframe #5 |

333.3[$\mu$s]

eNB1
TRANSMISSION
TIMING t1s

| UL Subframe #0 | UL Subframe #1 | UL Subframe #2 | UL Subframe #3 | UL Subframe #4 | UL Subframe #5 | UL Subframe #6 |

TRANSMISSION TIMING t1s

EP 2 265 063 A2

# FIG. 3B

RECEPTION TIMING t1r

**eNB1 RECEPTION TIMING t1r**

| DL Subframe #0 | DL Subframe #1 | DL Subframe #2 | DL Subframe #3 | DL Subframe #4 | DL Subframe #5 |

66.6[μs]

**eNB2 RECEPTION TIMING t2r**

| UL Subframe #0 | UL Subframe #1 | UL Subframe #2 | UL Subframe #3 | UL Subframe #4 | UL Subframe #5 | UL Subframe #6 |

TRANSMISSION TIMING t1s

EP 2 265 063 A2

## FIG. 3C

RECEPTION TIMING t1r

eNB2 RECEPTION TIMING t2r

| DL Subframe #0 | DL Subframe #1 | DL Subframe #2 | DL Subframe #3 | DL Subframe #4 | DL Subframe #5 |

200[$\mu$ s]

eNB2 TRANSMISSION TIMING t2s

| UL Subframe #0 | UL Subframe #1 | UL Subframe #2 | UL Subframe #3 | UL Subframe #4 | UL Subframe #5 | UL Subframe #6 |

TRANSMISSION TIMING t1s

EP 2 265 063 A2

FIG. 4

## FIG. 5

# FIG. 6

```
        ┌──────────────┐
        │    SIGNAL     │
        │  RECEPTION    │
        └──────┬───────┘
               │      S100
        ┌──────▼───────┐
        │    DETECT     │
        │RECEPTION TIMING│
        └──────┬───────┘
               │      S101
        ┌──────▼───────┐
        │ DEMODULATE THE │
        │RECEIVED SIGNAL │
        └──────┬───────┘
               │          S102
          ◇────▼─────────◇
         ╱  IS TRANSMISSION ╲    No
        ◇    TIMING TO       ◇─────────┐
         ╲  BE ADJUSTED?    ╱          │
          ◇────┬──────────◇            │         S104
            Yes│                   ◇────▼──────◇
               │   S103           ╱ IS HO PROCESSING ╲   No
        ┌──────▼───────┐        ◇   IN PROGRESS?      ◇──────┐
        │    ADJUST     │        ╲                    ╱      │
        │ TRANSMISSION  │         ◇────┬────────────◇        │        S108
        │ TIMING TO THE │           Yes│                ┌────▼─────────┐
        │SPECIFIED VALUE│              │    S105       │ NO ADJUSTMENT │
        └──────────────┘        ┌──────▼───────┐       │ OF TRANSMISSION│
                                │   EXTRACT     │       │    TIMING     │
                                │RECEPTION TIMING│       └──────────────┘
                                └──────┬───────┘
                                       │    S106
                                ┌──────▼───────┐
                                │  CALCULATE    │
                                │ TRANSMISSION  │
                                │   TIMING      │
                                └──────┬───────┘
                                       │    S107
                                ┌──────▼───────┐
                                │    ADJUST     │
                                │ TRANSMISSION  │
                                │ TIMING TO THE │
                                │CALCULATED VALUE│
                                └──────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI9163432 B